# EUROPÄISCHE PATENTSCHRIFT

(11) **EP 2 804 801 B1**
(45) Veröffentlichungstag und Bekanntmachung des Hinweises auf die Patenterteilung: **07.02.2018**
(21) Anmeldenummer: 12812847.7
(22) Anmeldetag: 17.12.2012
(51) Int. Cl.: B62D 1/184, F16F 7/06

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 20.01.2012 DE 102012100486; 13.06.2012 DE 202012102159 U
(43) Veröffentlichungstag der Anmeldung: 26.11.2014
(73) Patentinhaber: ThyssenKrupp Presta Aktiengesellschaft, 9492 Eschen (LI); thyssenkrupp AG, 45143 Essen (DE)
(72) Erfinder: SCHNITZER, Hieronymus, 9487 Gamprin (LI); MANGER, Philipp, 97654 Bastheim-Reyersbach (DE)
(74) Vertreter: Fechner, Thomas
(86) Internationale Anmeldenummer: PCT/EP2012/005194
(87) Internationale Veröffentlichungsnummer: WO 2013/107486

(56) Entgegenhaltungen:
- EP-A1- 1 110 843
- DE-C1- 19 718 031
- US-A- 6 092 957

## Beschreibung

Die vorliegende Erfindung betrifft eine Lenksäule gemäß des Oberbegriffs des Patentanspruchs 1.

Gattungsgemäße Lenksäulen zeichnen sich dadurch aus, dass die Position des an er Lenkspindel befestigten Lenkrades an den Fahrer angepasst werden kann. Es sind sowohl in der Höhe als auch in der Längsrichtung der Lenkspindel als auch in beiden genannten Richtungen verstellbare Lenksäulen beim Stand der Technik bekannt. Die Feststellvorrichtung dient dazu, die Lenkspindellagereinheit und damit die Lenkspindel in der Schließstellung in der eingestellten Position zu halten, während in der Öffnungsstellung der Feststellvorrichtung die gewünschte Verstellung und damit Anpassung an die Position und Größe des Fahrers möglich ist. Die Feststellvorrichtung kann durch Betätigung des Bedienhebels von der Schließstellung in die Öffnungsstellung und in umgekehrter Richtung gebracht werden und der Bedienhebel wird hierzu um die Hebelschwenkachse geschwenkt. Durch das Verschwenken des Bedienhebels um die Hebelschwenkachse kommt es in der Regel zu einem Hub in Längsrichtung der Hebelschwenkachse, wodurch die Feststellvorrichtung von ihrer Öffnungsstellung in die Schließstellung und umgekehrt gebracht wird. Zur Vergleichmäßigung der Bewegung zwischen Öffnungsstellung und Schließstellung und/oder in der entgegengesetzten Richtung ist es bekannt, Dämpfungseinrichtungen zur Dämpfung der Schwenkbewegung des Bedienhebels um die Hebelschwenkachse vorzusehen. Ein Ausführungsbeispiel einer verstellbaren Lenksäule ist z.B. in der DE 197 18 031 C1 gezeigt. Dort ist die Dämpfungseinrichtung in Form eines Rotationsdämpfers in den Bedienhebel integriert, was allerdings den Nachteil eines relativ aufwendigen und komplizierten Aufbaus des Bedienhebels hat.

Die EP 1 110 843 A1 zeigt eine Lenksäule gemäß des Oberbegriffs des Patentanspruchs 1, welche ebenfalls kompliziert aufgebaut erscheint.

Aufgabe der Erfindung ist es, bei gattungsgemäßen Lenksäulen mit zumindest einer Dämpfungseinrichtung diesen Nachteil zu vermeiden.

Dies wird erfindungsgemäß durch eine Lenksäule gemäß Anspruch 1 erreicht.

Bei der Erfindung ist vorgesehen, zumindest ein Tragteil der Trageinheit zwischen Bedienhebel und Dämpfungseinrichtung anzuordnen. Ein Grundgedanke ist es somit, die Dämpfungseinrichtung nicht mehr im Bereich des Bedienhebels sondern an anderer Stelle anzubringen, womit die Konstruktion insbesondere im Bereich des Bedienhebels vereinfacht wird.

Durch die Dämpfungseinrichtung wird die Schwenk- bzw. Rotationsgeschwindigkeit des Bedienhebels beim Verschwenken um die Hebelschwenkachse verringert. Ein Scheppern oder Klappern der Feststellvorrichtung bei dieser Bewegung ist dadurch zumindest stark verringert bzw. ganz verhindert. Insgesamt ergibt sich eine für den Benutzer angenehme gleichmäßige Bewegung in der Feststellvorrichtung.

Günstigerweise ist vorgesehen, dass die Dämpfungseinrichtung eine geschwindigkeitsabhängige Dämpfungsfunktion aufweist. In anderen Worten ist es somit bevorzugt vorgesehen, dass die Dämpfungseinrichtung bei verschiedenen Verschwenkgeschwindigkeiten um die Hebelschwenkachse unterschiedlich stark dämpft. So kann z.B. vorgesehen sein, dass bei einer schnellen Verschwenkung der Bremseffekt besonders stark ist, während bei einer langsamen Verschwenkung die Bremswirkung geringer ist.

In einer bevorzugten Ausführungsform ist die Dämpfungseinrichtung derart ausgestaltet, dass die Dämpfungswirkung der Dämpfungseinrichtung, zumindest in einer Schwenkrichtung, für mindestens 20%, vorzugsweise für mindestens 50% des maximal möglichen Verschwenkwinkelbereichs der Verschwenkung des Bedienhebels um die Hebelschwenkachse wirksam ist. Besonders ist dabei zu bevorzugen, dass die Dämpfungswirkung, zumindest in einer Schwenkrichtung, für mindestens zwei Drittel, oder noch mehr, bevorzugt für mindestens drei Viertel, des möglichen Verschwenkbereiches wirksam ist. Eine Dämpfungswirkung über den gesamten Verschwenkbereich ist jedoch meist nicht erforderlich, da in dem Bereich hoher Spannkraft durch die daraus resultierenden hohen Reibkräfte bereits eine Dämpfung in der Feststellvorrichtung von allein gegeben ist. So kann es mit Vorzug vorgesehen sein, die Dämpfungswirkung der Dämpfungseinrichtung für den Verschwenkbereich zu reduzieren oder ganz zu unterdrücken, in dem die Spannkräfte der Feststellvorrichtung Werte annehmen, die größer oder gleich drei Viertel der maximal vorgesehenen Spannkraft der Feststellvorrichtung sind.

Durch die über einen großen Verschwenkbereich wirkende Dämpfung kann eine starke Beschleunigung des Bedienhebels, insbesondere beim Öffnen, verhindert werden, so dass erhöhte Vibrationen und/oder Kontaktanschläge, insbesondere beim Öffnen, gemindert sind.

Der Bedienhebel ist bevorzugt aber nicht zwingend von Hand bedienbar. Es ist auch ein motorischer Antrieb möglich.

Bevorzugte Ausgestaltungsformen einer erfindungsgemäßen Lenksäule sehen vor, dass die Dämpfungseinrichtung das Verschwenken in einer der Schwenkrichtungen um die Hebelschwenkachse stärker dämpft als in der dazu entgegengesetzten Schwenkrichtung. Zum Beispiel ist es in diesem Sinne denkbar und möglich, dass die Dämpfungseinrichtung in einer der Schwenkrichtungen um die Hebelschwenkachse einen Freilauf aufweist. Besonders bevorzugte Ausgestaltungsformen der Erfindung sehen vor, dass die Dämpfungseinrichtung nur beim Öffnen aber nicht beim Schließen der Feststellvorrichtung wirkt. In anderen Worten kann somit vorgesehen sein, dass die Dämpfungseinrichtung ausschließlich bei einem Verschwenken des Bedienhebels von einer Schließstellung der Feststelleinrichtung in eine Öffnungsstellung der Feststelleinrichtung dämpft.

Es muss aber in Schließrichtung nicht zwingend ein Freilauf vorhanden sein. Es kann abweichend auch vorgesehen sein, dass die Dämpfungseinrichtung bei einer Verschwenkung des Bedienhebels von der genannten Schließstellung der Feststellvorrichtung in die genannte Öffnungsstellung der Feststellvorrichtung die Verschwenkung stärker dämpft als die Verschwenkung in die Gegenrichtung.

Bei der eingesetzten Dämpfungseinrichtung handelt es sich um eine energieaufzehrende Dämpfungseinrichtung. Dies bedeutet, dass beim Dämpfungsvorgang Energie, vorzugsweise vollständig, aufgezehrt bzw. vernichtet und eben nicht gespeichert wird. Die durch die Dämpfungseinrichtung aufgezehrte Energie verwandelt sich meist in Wärme und kann nicht mehr als Bewegungsenergie in die Feststelleinrichtung zurückgeführt werden. Dies unterscheidet die energieaufzehrenden Dämpfungseinrichtungen auch von elastischen Federelementen oder dergleichen. Über solche Federelemente kann zwar bei einer entsprechenden Ausgestaltung auch ein Bremseffekt erzielt werden. Die bei diesem Bremsen entnommene Energie wird durch die gattungsfremden Federelemente aber als elastische Deformation gespeichert und später zumindest zum Teil wieder ins System zurückgeführt. Die Rückführung der Energie ins System erhöht aber die Schwingungsneigung und damit das Risiko eines Klapperns des Bedienhebels beim Öffnen und oder Schließen der Feststelleinrichtung. Bei der erfindungsgemäß eingesetzten energieaufzehrenden Dämpfungseinrichtung ist eine solche Energierückführung nicht möglich.

Es hat sich überraschenderweise gezeigt, dass aus dem Bau von Beschlägen für die Möbelindustrie bekannte energieaufzehrende Dämpfungseinrichtungen für Feststelleinrichtungen zumindest von ihrem Grundaufbau her verwendet werden können. Zum Beispiel kann es sich um an sich bekannte Fluiddämpfer handeln, wobei reine Fluiddämpfer nicht erfindungsgemäß sind. In diesem Sinne sehen bevorzugte Varianten einer solchen Feststelleinrichtung vor, dass die Dämpfungseinrichtung zumindest zwei relativ zueinander bewegbare Dämpferbauteile und zumindest ein Dämpfungsfluid aufweist, wobei das Dämpfungsfluid zur Dämpfung der sich relativ zueinander bewegenden Dämpferbauteile zwischen diesen angeordnet ist bzw. wirkt. Solche Dämpfungseinrichtungen sind als Linear- aber auch als Rotationsdämpfer bei der bereits genannten Herstellung von Möbelbeschlägen bekannt. Bei der Erfindung ist vorgesehen, dass die Dämpfungseinrichtung ein Rotationsdämpfer ist oder einen solchen aufweist. Solche Dämpfungseinrichtungen in Form von Rotationsdämpfern weisen zumindest zwei relativ zueinander um eine Dämpferdrehachse drehbare Dämpferbauteile auf.

Es handelt sich bei der Dämpfungseinrichtung um eine Art von Reibdämpfer handeln, bei dem zwischen den Dämpferbauteilen zumindest ein Reibschluss wirkt. Auch eine Kombination aus beiden Dämpferarten ist möglich.

Bei Rotationsdämpfern kann es sich bei einem der Dämpferbauteile z.B. um ein Gehäuse des Rotationsdämpfers handeln. Das andere der relativ zueinander bewegbaren Dämpferbauteile kann dann ein drehbar in dem Gehäuse gelagerter Rotor sein. Die energieaufzehrende Dämpfungswirkung kann zusätzlich z.B. in einem Dämpfungsfluid, welches zwischen dem Rotor und dem Gehäuse wirkt bzw. angeordnet ist, erzeugt werden und wird jedenfalls zwischen Reibflächen erzeugt. Beim Dämpfungsfluid von Fluiddämpfern kann es sich um Flüssigkeiten wie z.B. Öle, Silikon oder, vorzugsweise hochviskose, andere Materialien handeln. Als Dämpfungsfluid kann aber auch Luft oder ein anderes Gas eingesetzt werden. Die energieaufzehrende Dämpfungswirkung erfolgt bei Fluiddämpfern durch Verdrängung des Dämpfungsfluides bzw. indem man das Dämpfungsfluid durch geeignet ausgeformte Drosselstellen oder dergleichen hindurchdrückt. Beim Stand der Technik ist eine Vielzahl von geeigneten Dämpfern dieser Art bekannt. Gleitdämpfer beruhen auf einem Reibschluss. Bei diesen Ausgestaltungsformen ist günstigerweise vorgesehen, dass die Dämpferbauteile zumindest im Bereich des Reibschlusses Kunststoffoberflächen aufweisen oder vollständig aus Kunststoff ausgeführt sind.

Bei der Erfindung ist vorgesehen, dass die Feststellvorrichtung einen, das Tragteil oder die Tragteile durchdringenden Spannbolzen aufweist, auf dem der Bedienhebel angeordnet ist. Im Sinne einer kompakten Bauweise kann hierbei vorgesehen sein, dass die Dämpfungseinrichtung auf bzw. an dem Spannbolzen angeordnet ist. Eine besonders hohe Kompaktheit und Einfachheit des Aufbaus wird auch erreicht, indem die Dämpferdrehachse koaxial zur Hebelschwenkachse, um die der Bedienhebel schwenkbar ist, angeordnet ist. Günstig ist es ebenfalls, wenn die Feststellvorrichtung einen, das Tragteil oder die Tragteile durchdringenden Spannbolzen aufweist, auf dem der Bedienhebel angeordnet ist, und der Spannbolzen koaxial zur Hebelschwenkachse, um die der Bedienhebel schwenkbar ist, angeordnet ist.

Die Erfindung sieht vor, dass die Feststellvorrichtung einen, das Tragteil oder die Tragteile durchdringenden Spannbolzen aufweist, auf dem der Bedienhebel angeordnet ist, und eines der Dämpferbauteile drehfest mit dem Spannbolzen verbunden ist und das andere der Dämpferbauteile drehfest mit dem Tragteil oder einem der Tragteile verbunden ist. Das drehfest mit dem Spannbolzen verbundene Dämpferbauteil kann mit dem Spannbolzen z.B. formschlüssig bezüglich der Dreh bzw. Rotationsrichtung verbunden sein. Eine andere günstige Variante sieht vor, dass eines der Dämpferbauteile, vorzugsweise formschlüssig, mit einer am Spannbolzen befestigten Mutter verbunden ist bzw. in dieser Art und Weise auf der Mutter aufsitzt. Der Vollständigkeit halber wird darauf hingewiesen, dass der Begriff "drehfest" dahingehend auszulegen ist, dass zwischen dem Dämpferbauteil und dem Spannbolzen bzw. dem Tragteil eine Art der Befestigung vorgesehen ist, die bei Verdrehen in zumindest in einer der Drehrichtungen eine fixe Verbindung darstellt. Dabei können auch kleine Verdrehspiele zugelassen sein. Dies bedeutet aber noch nicht zwingend, dass bei Bewegungen in anderen Richtungen ebenfalls eine Fixierung zwischen diesen beiden Bauteilen notwendig ist, obwohl dies natürlich so ausgeführt sein kann.

Besonders bevorzugte Ausgestaltungsformen der Erfindung sehen vor, dass die Dämpfungseinrichtung als ein nachrüstbares Bauteil für bereits bestehende Feststellvorrichtungen bzw. Lenksäulen ausgeführt ist. Hierfür ist es günstig, wenn eines der, insbesondere das nicht mit dem Spannbolzen drehfest verbundene Dämpferbauteil mittels einer, vorzugsweise zerstörungsfrei, lösbaren Verbindung drehfest mit dem Tragteil oder einem der Tragteile verbunden ist. Unter einer zerstörungsfrei lösbaren Verbindung versteht man in diesem Zusammenhang eine Verbindung, welche dazu vorgesehen und ausgelegt ist, mit einfachen Mitteln bzw. Handgriffen gelöst werden zu können. Als Beispiele für solche zerstörungsfrei lösbaren Verbindungen sind z.B. Schraub- oder Schnappverbindungen zu nennen, bei denen auch eine erneute Montage nach einer vorhergehenden Demontage möglich ist. Durch diese Anordnung wird eine Dämpfungseinrichtung als Modulbaukasten für verschiedene Lenksäulen darstellbar.

Die Feststellvorrichtung einer erfindungsgemäßen Lenksäule ist günstigerweise so konfiguriert, dass sie beim Verschwenken des Bedienhebels um die Hebelschwenkachse einen Hub in Richtung parallel zur Schwenkachse ausführt. Weiters ist es günstig, wenn die Feststellvorrichtung zumindest ein Nockenspannsystem aufweist. Solche Nockenspannsysteme bestehen günstigerweise aus zumindest zwei Nockenträgern, auf denen jeweils zumindest ein Nocken angeordnet ist. Die Nockenspannsysteme bzw. insbesondere deren Nockenträger können auf dem Spannbolzen der Feststellvorrichtung aufsitzen. Günstigerweise ist vorgesehen, dass einer der Nockenträger mit seinen oder seinem Nocken bezüglich einer Verdrehung um die Hebelschwenkachse drehfest mit dem Bedienhebel verbunden ist. Der andere Nockenträger mit seinem oder seinen Nocken kann dann z.B. bezüglich einer Drehung um die Hebelschwenkachse drehfest mit dem Tragteil oder einem der Tragteile der Trageinheit verbunden sein. Nockenspannsysteme dieser Art sind in einer Vielzahl von Ausgestaltungsformen bekannt. Die Nocken können drehbar am jeweiligen Nockenträger oder fix bzw. einstückig, also nicht drehbar am Nockenträger befestigt sein. Bei letzteren wirken die Nocken des ersten Nockenträgers bei Verdrehung der Nockenträger relativ zueinander um die Hebelschwenkachse mit dem oder den Nocken des anderen Nockenträgers ausschließlich aneinander entlanggleitend zusammen. Die erfindungsgemäßen Dämpfungseinrichtungen kommen besonders bevorzugt bei Nockenspannsystemen mit solchen ausschließlich aneinander entlang gleitend zusammenwirkenden Nocken zum Einsatz.

Die Nocken bilden auf den Nockenträgern eine Art von über die Basis des Nockenträgers überstehende Gebirge. Es ist bekannt, z.B. über entsprechende Ausformung der Steilheit der Flanken der Nocken die gewünschten Betätigungs und Klemmkräfte bereitzustellen. Günstigerweise stehen die Nocken in Richtung parallel zur Hebelschwenkachse von einer entsprechenden Basis des jeweiligen Nockenträgers ab. Jeder Nockenträger weist zumindest einen Nocken aber in der Regel auch mehrere Nocken auf. Die Nockenträger bzw. deren Basis können scheibenförmig ausgebildet sein. Die Basis bildet dann auch die Vertiefungen bzw. Täler zwischen den, die Gebirge bildenden Nocken. In der Betriebsstellung sind die Nocken des einen Nockenträgers und die des anderen Nockenträgers günstigerweise aufeinander zu gerichtet.

Besonders bevorzugt ist vorgesehen, dass die Dämpfungseinrichtung durch zumindest ein Tragteil nicht nur vom Bedienhebel sondern auch vom Nockenspannsystem getrennt ist. Es kann z.B. vorgesehen sein, dass der Bedienhebel und das Nockenspannsystem auf einer Seite eines Tragteils und die Dämpfungseinrichtung auf einer entgegengesetzten Seite dieses Tragteils angeordnet sind. Bei erfindungsgemäßen Lenksäulen kann die zur Befestigung der Lenksäule an der Karosserie des Kraftfahrzeuges vorgesehene Trageinheit genau ein Tragteil aufweisen, welches zwischen Dämpfungseinrichtung und Bedienhebel angeordnet ist. Besonders bevorzugte Ausgestaltungsformen der Erfindung sehen jedoch vor, dass die Trageinheit zwei Tragteile aufweist und die Lenkspindellagereinheit zwischen den Tragteilen angeordnet ist, wobei die Dämpfungseinrichtung zwischen den Tragteilen angeordnet ist oder beide Tragteile zwischen der Dämpfungseinrichtung und dem Bedienhebel angeordnet sind. Diese Art der Lenksäulen weist vorzugsweise genau zwei Tragteile auf, welche auch oft als Seitenwangen bezeichnet werden. Es kann sich aber auch um zumindest zwei, also auch um mehr als zwei Tragteile handeln.

In den Figuren sind beispielhaft verschiedene erfindungsgemäße Lenksäulen mit entsprechenden Feststellvorrichtungen und Dämpfungseinrichtungen dargestellt. Es zeigen:
Fig. 1 eine perspektivische Außenansicht auf eine erfindungsgemäß ausgebildete Lenksäule;
Fig. 2 einen Vertikalschnitt durch diese Lenksäule im Bereich des Spannbolzens mit auseinandergezogener Dämpfungseinrichtung;
Fig. 3 den Bereich A aus Fig. 2 vergrößert;
Fig. 4 einen Vertikalschnitt durch diese Lenksäule im Bereich des Spannbolzens mit auseinandergezogener Dämpfungseinrichtung in Betriebsstellung;
Fig. 5 Teile einer zweiten erfindungsgemäßen Ausgestaltungsform einer Lenksäule mit einer Feststellvorrichtung in Explosionsdarstellung;
Fig. 6 den Spannbolzen mit der Dämpfungseinrichtung des zweiten Ausführungsbeispiels losgelöst von den restlichen Bauteilen;
Fig. 7 eine nicht erfindungsgemäße Variante zur Fig. 4;
Fig. 8 ein weiteres erfindungsgemäßes Ausführungsbeispiel, bei dem die Dämpfungseinrichtung allerdings zwischen den Tragteilen angeordnet ist.

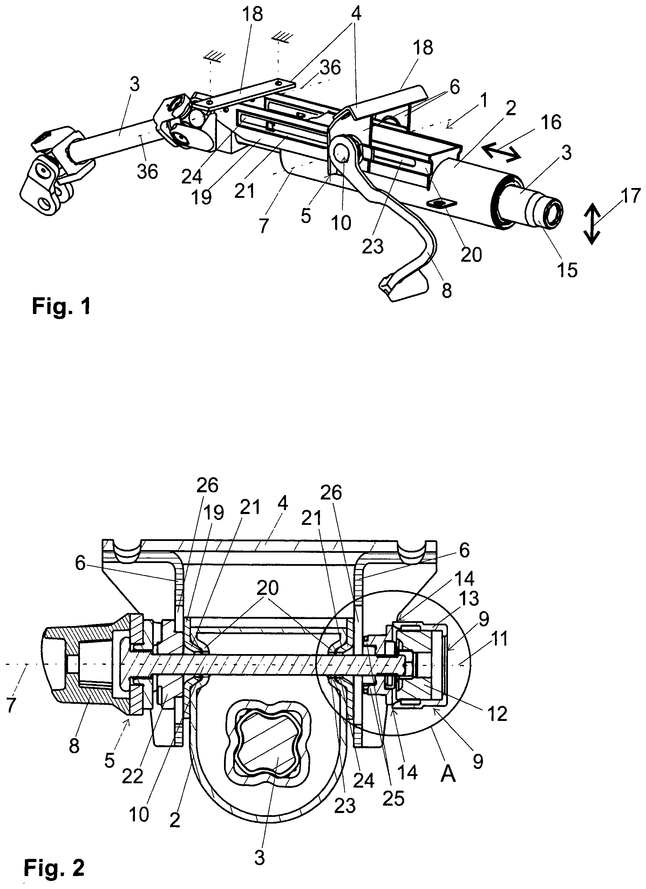

Zunächst wird anhand von Fig. 1 der generelle Aufbau des ersten erfindungsgemäßen Ausführungsbeispiels einer Lenksäule 1 beispielhaft erläutert. Die Trageinheit 4 ist dazu vorgesehen, mittels der Befestigungslaschen 18 an der Karosserie des Kraftfahrzeugs befestigt zu werden. Sie trägt die Lenkspindellagereinheit 2, in der die Lenkspindel 3 um ihre hier nicht dargestellte Längsachse drehbar gelagert ist. Am Lenkradanschluss 15 der Lenkspindel 3 kann das hier nicht dargestellte Lenkrad befestigt werden. Zur Anpassung der Position des Lenkrades kann die Lenkspindellagereinheit 2 in dieser verstellbaren Lenksäule 1 sowohl in den Längsrichtungen 16 als auch in den Höhenrichtungen 17 verstellt werden. Hierzu muss sich die Feststellvorrichtung 5 in ihrer Öffnungsstellung befinden. Nach dem Einstellen der gewünschten Position des Lenkrades wird der Bedienhebel 8 im gezeigten Ausführungsbeispiel von Hand nach oben geschwenkt und die Feststellvorrichtung 5 damit in ihre Schließstellung gebracht, in der sie die Position der Lenkspindellagereinheit 2 in der Trageinheit 4 fixiert. Beim Stand der Technik ist sowohl ein reibschlüssiges als auch ein formschlüssiges Fixieren der Lenkspindellagereinheit 2 in der Trageinheit 4 bekannt. Beides kann auch im Zusammenhang mit der Erfindung realisiert werden. Beim ersten Ausführungsbeispiel handelt es sich um eine ausschließlich reibschlüssig ausgeformte Variante. Der Vollständigkeit halber sei darauf hingewiesen, dass erfindungsgemäße Lenksäulen 1 auch nur in Höhenrichtung 17 oder nur in Längsrichtung 16 verstellbar sein können.

Handelt es sich um in beide dieser Richtungen verstellbare Lenksäulen 1 so ist günstigerweise, wie hier im ersten Ausführungsbeispiel auch realisiert, ein sogenanntes Zwischenteil 19 vorgesehen, welches vorzugsweise um eine horizontale Achse schwenkbar an der Trageinheit 14 befestigt ist. Das Zwischenteil 19 kann, wie hier auch im ersten Ausführungsbeispiel realisiert, zwischen den Seitenwangen bzw. Tragteilen 6 der Trageinheit 4 und der Lenkspindellagereinheit 2 angeordnet sein. Die Längsverstellung in Richtungen 16 erfolgt in diesem Ausführungsbeispiel, indem die Lenkspindellagereinheit 2 relativ zum Zwischenteil 19 in zumindest eine der Richtungen 16 verschoben wird. Zur Höhenverstellung in den Richtungen 17 wird die Lenkspindellagereinheit 2 gemeinsam mit dem Zwischenteil 19 relativ zur Trageinheit 4 in Vertikalrichtung um eine Schwenkachse 36 verschwenkt. Natürlich sind hier auch ganz andere Ausgestaltungsformen möglich. Insbesondere kann die Erfindung auch bei Lenksäulen realisiert werden, bei denen die Lenkspindellagereinheit 2 an einem einzigen Tragteil 6 der Trageinheit 4 gehalten ist.

Im gezeigten Ausführungsbeispiel weisen sowohl die Lenkspindellagereinheit 2 als auch das Zwischenteil 19 jeweils eine Sicke 20 bzw. 21 auf, mittels derer sie ineinander gelagert sind. Diese Art der ineinander greifenden Sicken 20, 21 lässt die bereits erwähnte Längsverstellung in Längsrichtung 16 zu, sorgt aber ansonsten für eine sehr stabile verkippsichere Lagerung der Lenkspindellagereinheit 2 im Zwischenteil 19 und damit in der Trageinheit 4. Der Spannbolzen 10 der Feststellvorrichtung 5 kann bei solchen Ausgestaltungsformen wie hier auch realisiert, günstigerweise durch die Lenkspindellagereinheit 2 und das Zwischenteil 19 im Bereich der genannten Sicken 20 und 21 insbesondere in deren Sickenböden hindurchgeführt sein. Hierzu sind in den genannten Sicken 20 und 21 im gezeigten Ausführungsbeispiel Langlöcher 23 und 24 realisiert, welche auch die Verstellung in den Längsrichtungen 16 ermöglichen. Für die Realisierung der Höhenverstellbarkeit in Höhenrichtungen 17 ist in den Seitenwangen bzw. Tragteilen 6 jeweils ein Langloch 26 angeordnet, in dem der Spannbolzen 10 samt Feststellvorrichtung 5 in deren Öffnungsstellung verfahren werden kann, um eine Vertikalverstellung zu erreichen.

Die Feststellvorrichtung 5 klemmt in ihrer Schließstellung die Tragteile 6 der Trageinheit 4 im ersten Ausführungsbeispiel reibschlüssig gegen die Lenkspindellagereinheit 2, womit letztere in ihrer Position fixiert ist. Um diese Klemmwirkung zu erzeugen, ist im gezeigten Ausführungsbeispiel und das hier nicht weiter im Detail dargestellte aber an sich bekannte Nockenspannsystem 22 mit zwei Nockenträgern 31 und jeweils darauf angeordnete Nocken 32 realisiert. Einer der Nockenträger 31 ist bezüglich Verdrehung um die Hebelschwenkachse 7 drehfest mit dem Bedienhebel 8 verbunden. Der andere der Nockenträger 31 ist bezüglich einer Verdrehung um die Hebelschwenkachse 7 drehfesten mit einem der Tragteile 6 verbunden. Durch das an einander Entlanggleiten der Nocken 32 der beiden Nockenträger 31 beim Verdrehen bzw. Verschwenken des Bedienhebels 8 um die Hebelschwenkachse 7 wird zum Spannen und Entspannen der Feststellvorrichtung 5 jeweils ein Hub in Richtung der Hebelschwenkachse 7 erzeugt. Dies ist an sich bekannt und muss hier nicht weiter erläutert werden.

Erfindungsgemäß ist nun an dieser, in den bisher geschilderten Merkmalen an sich bekannten Lenksäule 1 eine Dämpfungseinrichtung 9 zur Vergleichmäßigung bzw. Dämpfung der Dreh- bzw. Schwenkbewegung des Bedienhebels 8 um die Hebelschwenkachse 7 vorgesehen. Im gezeigten Ausführungsbeispiel sitzt die Dämpfungseinrichtung 9 direkt auf dem Spannbolzen 10. Die Dämpferdrehachse 11, um die die beiden Dämpferbauteile 12 und 13 relativ zueinander verdreht werden können, liegt koaxial zur Hebelschwenkachse 7. Erfindungsgemäß ist die Dämpfungseinrichtung 9 durch zumindest ein Tragteil 6 räumlich vom Bedienhebel 8 getrennt. Bedienhebel 8 und Nockenspannsystem 22 sind im gezeigten Ausführungsbeispiel auf einer Seite eines der Tragteile 6 angeordnet, die Dämpfungseinrichtung 9 befindet sich auf der dazu gegenüberliegenden Seite des anderen Tragteils 6. In dem hier gezeigten Ausführungsbeispiel ist somit vorgesehen, dass beide Tragteile 6 zwischen der Dämpfungseinrichtung 9 und dem Bedienhebel 8 bzw. auch dem Nockenspannsystem 22 angeordnet sind.

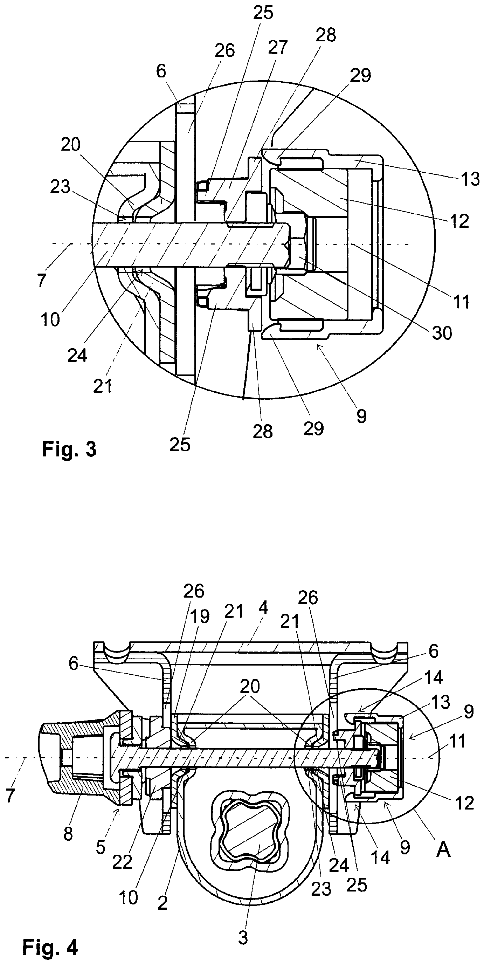

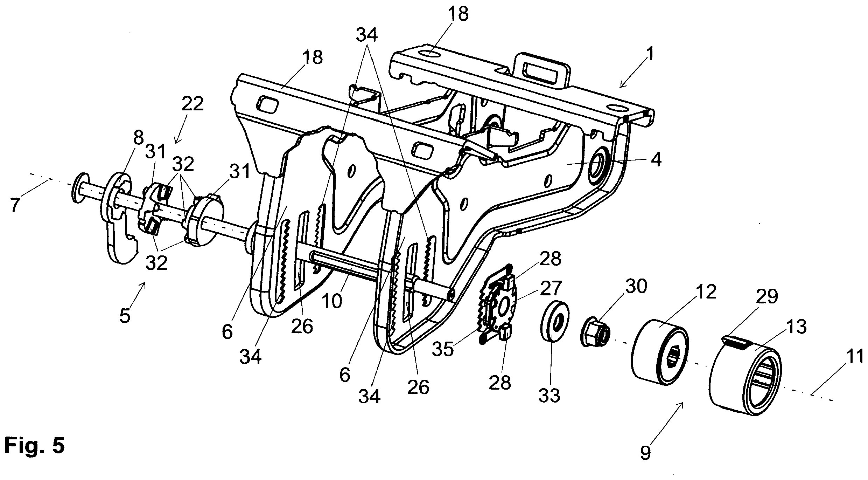

Bei der in diesem ersten Ausführungsbeispiel realisierten Dämpfungseinrichtung 9 handelt es sich um den gleichen Reibungsrotationsdämpfer, wie er im zweiten Ausführungsbeispiel gemäß Fig. 5 in einer Explosionsdarstellung dargestellt ist. Beim Dämpferbauteil 12 handelt es sich in der hier realisierten Ausgestaltungsform um eine Art Zylinder, dessen Zylindermantelaußenfläche die erste Reibfläche bildet. Die zweite damit zusammenwirkende Reibfläche ist die ebenfalls vorzugsweise zylindermantelförmig ausgeführte innere Mantelfläche des hier zylindermantelrohrförmig ausgeführten Dämpferbauteils 13. Die Reibflächen sind günstigerweise zumindest mit Kunststoff beschichtet. Besonders einfach ist es, wenn die Dämpferbauteile 12 und 13 vollständig aus Kunststoff bestehen. In den beiden ersten Ausführungsbeispielen ist das Dämpferbauteil 12 drehfest mit dem Spannbolzen 10 verbunden. Dies ist in diesen Ausführungsformen realisiert, indem das Dämpferbauteil 12 eine zentrale Ausnehmung aufweist, welche formschlüssig auf der am Spannbolzen 10 entsprechend drehfest befestigten Mutter 30 aufsitzt. Das zweite Dämpferbauteil 13 ist drehfest mit dem entsprechenden Tragteil 6 und damit mit der Trageinheit 4 und damit mit der Karosserie des Kraftfahrzeugs verbunden. Diese Verbindung 14 ist in den bisher erläuterten Ausführungsbeispielen als eine Schnappverbindung ausgeführt. Hierzu weist das Dämpferbauteil 13 Schnapphaken 29 auf, mit denen das Dämpferbauteil 13 auf Zapfen 28 eines Lagerteils 27 der Feststellvorrichtung 5 aufgeschnappt sind, womit die drehfeste Befestigung des Dämpferbauteils 13 an dem Tragteil 6 realisiert ist, da das Lagerteil 27 zusätzlich Führungszapfen 25 aufweist, mit denen es zumindest in der Schließstellung der Feststellvorrichtung 5 in das entsprechende Langloch 26 des Tragteils 6 eingreift. Bei diesen ersten beiden Ausführungsbeispielen reicht es, zum Nachrüsten einer entsprechenden Dämpfungseinrichtung 9 auf einer vorab nicht mit einer Dämpfungseinrichtung versehenen Lenksäule 1 aus, zunächst das Dämpferbauteil 12 formschlüssig an der Mutter 30 bzw. dem Spannbolzen 10 zu befestigen. Anschließend kann das zweite Dämpferbauteil 13 über die geschilderte Verbindung 14 am Lagerteil 27 und damit drehfest am Tragteil 6 befestigt werden. In den hier gezeigten Ausführungsbeispielen reicht hierzu ein Aufschnappen der Schnapphaken 29 auf die Lagerteile 27 bzw. deren Zapfen 28. Hierdurch wird ein einfaches und schnelles Nachrüsten der Lenksäule 1 mit einer Dämpfungseinrichtung 9 möglich. Natürlich können anstatt der schnapperartig ausgebildeten Verbindung 14 auch andere, insbesondere leicht lösbare, Verbindungen realisiert werden. Hier ist z.B. Verschrauben zu nennen. Anstelle dessen sind natürlich auch dauerhafte Verbindungen z.B. durch Verschweißen oder gleich einstückige Ausfertigungen denkbar. In den Fig. 2 und 3 des ersten Ausführungsbeispiels ist das Dämpferbauteil 13 noch nicht vollständig auf die Zapfen 28 aufgeschnappt. Dieser fertig aufgeschnappte Zustand ist in Fig. 4 gezeigt, welcher dann dem Betriebszustand der Lenksäule 1 entspricht.

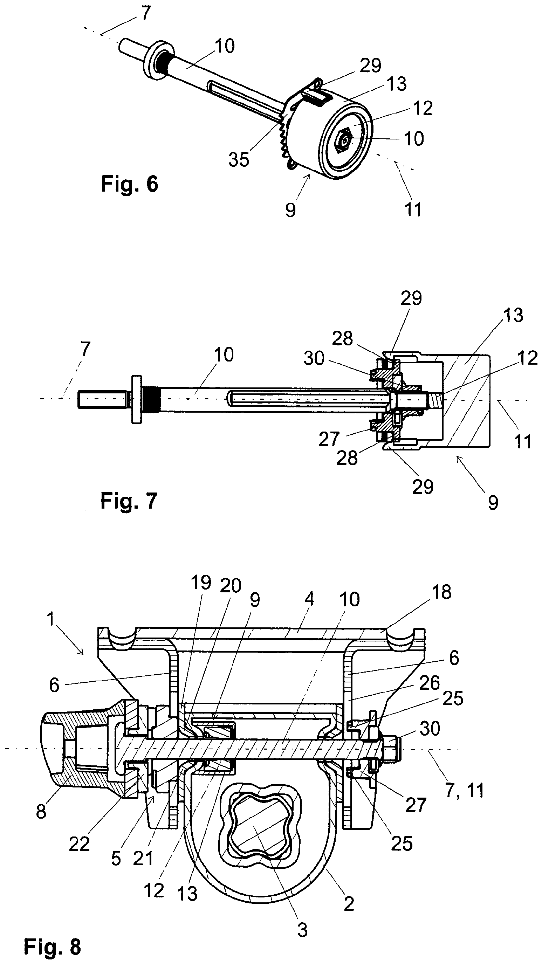

Das zweite erfindungsgemäße Ausführungsbeispiel gemäß der Fig. 5 und 6 entspricht in weiten Teilen den bisher geschilderten. In der Explosionsdarstellung der Feststellvorrichtung 5 sind die das Nockenspannsystem 22 bildende Nockenträger 31 und Nocken 32 besser zu sehen. Der wesentliche Unterschied zwischen den beiden ersten Ausführungsbeispielen liegt aber darin, dass im zweiten Ausführungsbeispiel mittels der Zahnleisten 34 und des am Lagerteil 27 befestigten federnden Verzahnungselementes 35 eine formschlüssige Fixierung der in Fig. 5 nicht dargestellten Lenkspindellagereinheit 2 an der Trageinheit 4 realisiert wird, wenn sich die Feststellvorrichtung 5 in ihrer Schließstellung befindet. Die Zahnleisten 34 und das Verzahnungselement 35 sind aus dem Stand der Technik bekannt und müssen nicht weiter erläutert werden. Es wird hierzu auf die WO 2007/009576 bzw. die DE 10 2007 003 091 B3 verwiesen. Die Beilagscheibe 33, welche in Fig. 5 in der Explosionsdarstellung gut zu sehen ist, dient der Abstützung der Mutter 30 am Lagerteil 27.

In den ersten Ausführungsbeispielen handelt es sich bei der Dämpfungseinrichtung 9, wie gesagt, um einen auf Reibschluss basierenden Rotationsdämpfer. In Fig. 7 ist stark schematisiert, eine nicht erfindungsgemäße Alternative dargestellt, in der ein an sich bekannter Fluidrotationsdämpfer zum Einsatz kommt. Dieser ist hier nur stark schematisiert dargestellt. Das Bauteil 13 bildet hier das Gehäuse, in dem ein Rotor des Dämpferbauteils 12 drehbar gelagert ist. Zwischen dem Gehäuse des Dämpferbauteils 13 und dem Rotor des Dämpferbauteils 12 wirkt ein Dämpfungsfluid, was die gewünschte Dämpfung erzeugt. Solche Fluidrotationsdämpfer sind an sich bekannt und müssen nicht weiter erläutert werden. Das Dämpferbauteil 13 dieses Ausführungsbeispiels gemäß Fig. 7 ist ebenfalls mittels einer Schnappverbindung 14 also mittels der Schnapphaken 29 an den dazu korrespondierenden Zapfen 28 und damit drehfest am Tragteil 6 gelagert. Das Dämpferbauteil 12 ist z.B. über eine entsprechende Verzahnung drehfest mit dem Spannbolzen 10 verbunden, sodass beim Verdrehen des Spannbolzens 10 zusammen mit dem Bedienhebel 8 um die Hebelschwenkachse 7 das Dämpferbauteil 12 um die Dämpferdrehachse 11 relativ zum Dämpferbauteil 13 gedreht wird, womit über das hier nicht dargestellte Dämpfungsfluid der entsprechende Dämpfungseffekt erzeugt wird. Auch hier sind die Hebelschwenkachse 7, um die der Spannbolzen 10 mit dem Bedienhebel 8 gedreht wird, koaxial zur Dämpferdrehachse 11 angeordnet.

In Fig. 8 ist beispielhaft eine weitere erfindungsgemäße Variante gezeigt, bei der die Dämpfungseinrichtung 9 allerdings zwischen den Tragteilen 6 angeordnet ist. In dieser Variante befindet sich somit nur ein Tragteil 6 zwischen Bedienhebel 8 und Nockenspannsystem 22 auf der einen Seite und Dämpfungseinrichtung 9 auf der anderen Seite. In der hier gezeigten Variante handelt es sich bei der Dämpfungseinrichtung 9 wiederum um einen Reibungsrotationsdämpfer. Das Dämpferbauteil 12 ist z.B. über einen entsprechenden Formschluss drehfest auf dem Spannbolzen 10 gelagert. Das Dämpferbauteil 13, welches wiederum gehäuseartig ausgeführt ist, ist an der Lenkspindellagereinheit 2 und damit bezüglich der Hebelschwenkachse 7 drehfest am Tragteil 6 bzw. Trageinheit 4 befestigt. Wird der Spannbolzen 10 beim Verschwenken des Bedienhebels 8 um die Hebelschwenkachse 7 gedreht, so verdreht sich über den genannten Formschluss das Dämpferbauteil 12 relativ zum Dämpferbauteil 13, womit über den Reibschluss zwischen diesen beiden Bauteilen die gewünschte Dämpfungswirkung erzeugt wird. Auch in diesem Ausführungsbeispiel liegen die Dämpferdrehachse 11 und die Hebelschwenkachse 7 koaxial aufeinander.

Prinzipiell ist es auch denkbar und möglich, die Dämpfungseinrichtung bzw. das Dämpferbauteil 12 über einen Längspressverband, bzw. einen Presssitz mit dem Spannbolzen 10 zu verbinden. Da die auftretenden Dämpfungsdrehmomente relativ klein sind, kann eine derartige einfache Pressverbindung genügen, um die erforderlichen Drehmomente zu übertragen. Alternativ ist es auch denkbar und möglich, auf dem Spannbolzen 10 ein Längs-, Quer-, oder Kreuzrändeln anzubringen, beispielsweise durch eine Rollierung, die durch entsprechende Materialveränderungen zu einem Übermaß in Bezug auf den Durchmesser des Spannbolzens 10 führt und darauf das Dämpferbauteil 12 mit Presssitz zu befestigen.

### Legende

### zu den Hinweisziffern:

| | | | |
|---|---|---|---|
| 1 | Lenksäule | 19 | Zwischenteil |
| 2 | Lenkspindellagereinheit | 20 | Sicke |
| 3 | Lenkspindel | 21 | Sicke |
| 4 | Trageinheit | 22 | Nockenspannsystem |
| 5 | Feststellvorrichtung | 23 | Langloch |
| 6 | Tragteil | 24 | Langloch |
| 7 | Hebelschwenkachse | 25 | Führungszapfen |
| 8 | Bedienhebel | 26 | Langloch |
| 9 | Dämpfungseinrichtung | 27 | Lagerteil |
| 10 | Spannbolzen | 28 | Zapfen |
| 11 | Dämpferdrehachse | 29 | Schnapphaken |
| 12 | Dämpferbauteil | 30 | Mutter |
| 13 | Dämpferbauteil | 31 | Nockenträger |
| 14 | Verbindung | 32 | Nocken |
| 15 | Lenkradanschluss | 33 | Beilagscheibe |
| 16 | Längsrichtung | 34 | Zahnleiste |
| 17 | Höhenrichtung | 35 | Verzahnungselement |
| 18 | Befestigungslasche | 36 | Schwenkachse |

## Patentansprüche

1. Lenksäule (1) für ein Kraftfahrzeug, wobei die Lenksäule (1) eine Lenkspindellagereinheit (2) zur drehbaren Lagerung einer Lenkspindel (3) der Lenksäule (1) und eine Trageinheit (4) für die Befestigung der Lenksäule (1) am Kraftfahrzeug aufweist und die Lenkspindellagereinheit (2) mittels einer Feststellvorrichtung (5) an zumindest einem Tragteil (6) der Trageinheit (4) gelagert ist, wobei die Position der Lenkspindellagereinheit (2) relativ zur Trageinheit (4) in einer Schließstellung der Feststellvorrichtung (5) festgestellt ist und in einer Öffnungsstellung der Feststellvorrichtung (5) verstellbar ist und die Feststellvorrichtung (5) einen, um eine Hebelschwenkachse (7) schwenkbaren Bedienhebel (8) aufweist, mittels dem sie zwischen der Schließstellung und der Öffnungsstellung verstellbar ist, wobei die Lenksäule (1) zumindest eine Dämpfungseinrichtung (9) zur Dämpfung der Schwenkbewegung des Bedienhebels (8) um die Hebelschwenkachse (7) aufweist, wobei die Dämpfungseinrichtung (9) auf einer dem Bedienhebel (8) entgegengesetzten Seite des Tragteils (6) angeordnet ist und die Feststellvorrichtung (5) einen, das Tragteil (6) oder die Tragteile (6) durchdringenden Spannbolzen (10) aufweist, auf dem der Bedienhebel (8) angeordnet ist und die Dämpfungseinrichtung (9) zumindest zwei relativ zueinander um eine Dämpferdrehachse (11) drehbare Dämpferbauteile (12, 13) aufweist, wobei eines der Dämpferbauteile (12) drehfest mit dem Spannbolzen (10) verbunden ist und eine Zylindermantelaußenfläche aufweist und das andere der Dämpferbauteile (13) drehfest mit dem Tragteil (6) oder einem der Tragteile (6) verbunden ist und zylindermantelrohrförmig ausgeführt ist und eine innere Mantelfläche aufweist, **dadurch gekennzeichnet, dass** die Zylindermantelaußenfläche des drehfest mit dem Spannbolzen (10) verbundenen Dämpferbauteils (12) eine erste Reibfläche bildet und die damit zusammenwirkende zweite Reibfläche die innere Mantelfläche des anderen Dämpferbauteils (13) ist.

2. Lenksäule (1) nach Anspruch 1, **dadurch gekennzeichnet, dass** die Trageinheit (4) zwei Tragteile (6) aufweist und die Lenkspindellagereinheit (2) zwischen den Tragteilen (6) angeordnet ist, wobei die Dämpfungseinrichtung (9) zwischen den Tragteilen (6) angeordnet ist oder beide Tragteile (6) zwischen der Dämpfungseinrichtung (9) und dem Bedienhebel (8) angeordnet sind.

3. Lenksäule (1) nach Anspruch 1 oder 2, **dadurch gekennzeichnet, dass** die Dämpferdrehachse (11) koaxial zur Hebelschwenkachse (7), um die der Bedienhebel (8) schwenkbar ist, angeordnet ist.

4. Lenksäule (1) nach einem der Ansprüche 1 bis 3, **dadurch gekennzeichnet, dass** der Spannbolzen (10) koaxial zur Hebelschwenkachse (7), um die der Bedienhebel (8) schwenkbar ist, angeordnet ist.

5. Lenksäule (1) nach einem der Ansprüche 1 bis 4, **dadurch gekennzeichnet, dass** das andere der Dämpferbauteile (13) mittels einer, vorzugsweise zerstörungsfrei, lösbaren Verbindung (14), vorzugsweise mittels einer Schraub- oder Schnappverbindung, drehfest mit dem Tragteil (6) oder einem der Tragteile (6) verbunden ist.

6. Lenksäule (1) nach einem der Ansprüche 1 bis 5, **dadurch gekennzeichnet, dass** die Reibflächen mit Kunststoff beschichtet sind oder die Dämpferbauteile (12, 13) vollständig aus Kunststoff bestehen.

## Claims

1. A steering column (1) for a motor vehicle, wherein the steering column (1) has a steering shaft bearing unit (2) for rotatably mounting a steering shaft (3) of the steering column (1) and a supporting unit (4) for securing the steering column (1) to the motor vehicle and the steering shaft bearing unit (2) is mounted on at least one supporting part (6) of the supporting unit (4) by means of a locking device (5), wherein the position of the steering shaft bearing unit (2) relative to the supporting unit (4) is locked in a closed position of the locking device (5) and adjustable in an open position of the locking device (5) and the locking device (5) has an operating lever (8) which is pivotable about a lever pivot axis (7) and by means of which it can be adjusted between the closed position and the open position, wherein the steering column (1) has at least one damping device (9) for damping the pivotal movement of the operating lever (8) about the lever pivot axis (7), wherein the damping device (9) is arranged on a side of the supporting part (6) which is opposite the operating lever (8) and the locking device (5) has a clamping bolt (10) which penetrates the supporting part (6) or the supporting parts (6) and on which the operating lever (8) is arranged and the damping device (9) has at least two damper components (12, 13) which are rotatable relative to one another about a damper axis of rotation (11), wherein one of the damper components (12) is non-rotatably connected to the clamping bolt (10) and a has an outer lateral cylinder surface and the other of the damper components (13) is non-rotatably connected to the supporting part (6) or one of the supporting parts (6) and is designed as a tubular lateral cylinder surface and has an inner lateral surface, **characterised in that** the outer lateral cylinder surface of the damper component (12) which is non-rotatably connected to the clamping bolt (10) forms a first friction surface and the second friction surface cooperating therewith is the inner lateral surface of the other damper component (13).

2. The steering column (1) according to Claim 1, **characterised in that** the supporting unit (4) has two supporting parts (6) and the steering shaft bearing unit (2) is arranged between the supporting parts (6), wherein the damping device (9) is arranged between the supporting parts (6) or both supporting parts (6) are arranged between the damping device (9) and the operating lever (8).

3. The steering column (1) according to Claim 1 or 2, **characterised in that** the damper axis of rotation (11) is arranged coaxially to the lever pivot axis (7) about which the operating lever (8) is pivotable.

4. The steering column (1) according to one of Claims 1 to 3, **characterised in that** the clamping bolt (10) is arranged coaxially to the lever pivot axis (7) about which the operating lever (8) is pivotable.

5. The steering column (1) according to one of Claims 1 to 4, **characterised in that** the other of the damper components (13) is non-rotatably connected to the supporting part (6) or one of the supporting parts (6) by means of a, preferably non-destructive, releasable connection (14), preferably by means of a screw or snap connection.

6. The steering column (1) according to one of Claims 1 to 5, **characterised in that** the friction surfaces are coated with plastics material or the damper components (12, 13) are made completely from plastics material.

## Revendications

1. Colonne de direction (1) pour un véhicule automobile, la colonne de direction (1) comprenant une unité formant palier d'arbre de direction (2) pour supporter de manière rotative un arbre de direction (3) de la colonne de direction (1) et une unité de support (4) pour la fixation de la colonne de direction (1) sur le véhicule automobile et l'unité formant palier d'arbre de direction (2) étant montée à l'aide d'un dispositif de fixation (5) sur au moins une pièce de support (6) de l'unité de support (4), la position de l'unité formant palier d'arbre de direction (2) par rapport à l'unité de support (4) étant fixée dans une position de fermeture du dispositif de fixation (5) et pouvant être déplacée dans une position d'ouverture du dispositif de fixation (5), et le dispositif de fixation (5) comprenant un levier de commande (8) pivotant autour d'un axe de pivotement de levier (7), grâce auquel il peut être déplacé entre la position de fermeture et la position d'ouverture, la colonne de direction (1) possédant au moins un appareil d'amortissement (9) destiné à amortir le mouvement de pivotement du levier de commande (8) autour de l'axe de pivotement de levier (7), l'appareil d'amortissement (9) étant implanté sur un côté de la pièce de support (6) opposé au levier de commande (8) et le dispositif de fixation (5) présentant un boulon de serrage (10) traversant la pièce de support (6) ou les pièces de support (6), boulon sur lequel le levier de commande (8) est agencé et le dispositif d'amortissement présente au moins deux éléments amortisseurs (12, 13) pouvant tourner l'un par rapport à l'autre autour d'un axe de rotation d'amortisseur (11), l'un des éléments amortisseurs (12) étant relié de manière fixe en rotation au boulon de serrage (10) et présentant une surface extérieure de chemise de cylindre et l'autre des éléments amortisseurs (13) étant relié de manière fixe en rotation à la pièce de support (6) ou à l'une des pièces de support (6), étant en forme de tube cylindrique et présentant une face de chemise intérieure, **caractérisée en ce que** la surface extérieure de chemise de cylindre de l'élément amortisseur (12) reliée de manière fixe en rotation au boulon de serrage (10) forme une première face de friction et la deuxième face de friction coopérant avec la première est la face de chemise intérieure de l'autre élément amortisseur (13).

2. Colonne de direction (1) selon la revendication 1, **caractérisée en ce que** l'unité de support (4) présente deux pièces de support (6) et l'unité formant palier d'arbre de direction (2) est disposée entre les pièces de support (6), le dispositif d'amortissement (9) étant disposé entre les pièces de support (6) ou les deux pièces de support (6) étant disposées entre le dispositif d'amortissement (9) et le levier de commande (8) .

3. Colonne de direction (1) selon la revendication 1 ou la revendication 2, **caractérisée en ce que** l'axe de rotation d'amortisseur (11) est disposé coaxialement à l'axe de pivotement de levier (7) autour duquel le levier de commande (8) peut pivoter.

4. Colonne de direction (1) selon l'une quelconque des revendications 1 à 3, **caractérisée en ce que** le boulon de serrage (10) est disposé coaxialement à l'axe de pivotement de levier (7) autour duquel le levier de commande (8) peut pivoter.

5. Colonne de direction (1) selon l'une quelconque des revendications 1 à 4, **caractérisée en ce que** l'autre des éléments amortisseurs (13) est relié de manière fixe en rotation à la pièce de support (6) ou à l'une des pièces de support (6) au moyen d'une liaison (14) amovible de préférence sans destruction, de préférence au moyen d'une liaison à visser ou d'une liaison à encliquetage.

6. Colonne de direction (1) selon l'une quelconque des revendications 1 à 5, **caractérisée en ce que** les surfaces de friction sont recouvertes de matière plastique ou les éléments amortisseurs (12, 13) sont entièrement constitués de matière plastique.
